Europäisches Patentamt

**European Patent Office**

**Office européen des brevets**

(11) Numéro de publication: **0 008 978**

**A1**

## DEMANDE DE BREVET EUROPEEN

(21) Numéro de dépôt: **79400588.4**

(22) Date de dépôt: **24.08.79**

(51) Int. Cl.³: **B 60 P 3/36**
**A 47 B 31/06**

(30) Priorité: **01.09.78 FR 7825288**

(43) Date de publication de la demande:
**19.03.80 Bulletin 80/6**

(84) Etats Contractants Désignés:
**AT BE CH DE GB IT LU NL SE**

(71) Demandeur: **Dufrancatel, Michel**
**380, allée Clair Bois**
**F-76230 Bois Guillaume(FR)**

(72) Inventeur: **Dufrancatel, Michel**
**380, allée Clair Bois**
**F-76230 Bois Guillaume(FR)**

(74) Mandataire: **Derambure, Christian**
**Cabinet BUGNION ASSOCIES SARL 116, boulevard**
**Haussmann**
**F-75008 Paris(FR)**

(54) Véhicule, notamment caravane, comportant un meuble.

(57) Un véhicule, notamment une caravane, comprend en outre un meuble comportant des moyens support (11), mobiles et/ou amovibles, reliés à la paroi (2) du véhicule (1), occupant soit une position escamotée et/ou pliée, soit une position de travail; et des moyens d'accrochage (12) des moyens support (11).

FIG.1

- 1 -

Véhicule, notamment caravane, comportant un meuble.

L'invention concerne un véhicule, notamment une caravane, comportant un meuble mobile.

On connaît déjà des meubles, notamment des tables, qui ne font pas partie intégrante d'un véhicule, logés dans le véhicule lorsqu'ils sont inutilisés et à l'extérieur de celui-ci pour être utilisés. Cependant, en position de rangement, ces meubles restent gênants car encombrants et le passage entre les positions de rangement et d'utilisation ou inversement est fastidieux ou compliqué.

On connaît aussi des meubles pliants autonomes mais ceux-ci ne sont pas spécialement adaptées pour être utilisés en liaison avec un véhicule tel qu'une caravane.

On connaît enfin des meubles associés à une caravane, montés mobiles à coulissement horizontal entre deux positions extrêmes d'utilisation, l'une à l'intérieur de la caravane, l'autre à l'extérieur. Outre le fait que le montage de ces meubles est souvent complexe, on relève que l'utilisation alternative à l'extérieur ou à l'intérieur est un handicap. De plus, l'utilisateur est toujours gêné par le fait que le meuble n'est pas, dans ces deux positions d'utilisation, à la même hauteur du fait que le plancher de la caravane est lui-même écarté du sol.

Le but de l'invention est de résoudre ce problème en proposant un véhicule, en particulier une caravane, du type comportant une paroi normalement verticale ;, caractérisé par le fait qu'il comprend un meuble comportant des moyens de support, mobiles et/ou amovibles, reliés mécaniquement directement ou non à la paroi du véhicule, susceptibles d'occuper soit une position escamotée et/ou pliée dans laquelle les moyens support sont logés dans un caisson ou dans le véhicule, soit une position de travail dans laquelle les moyens support sont placés au moins sensiblement à l'horizontale et vers l'extérieur du véhicule ; et des moyens d'accrochage des moyens support au moins en position de travail.

Les autres caractéristiques et avantages de l'invention seront bien compris grâce à la description qui suivra de plusieurs formes d'exécution en référence aux dessins annexés dans lesquels :

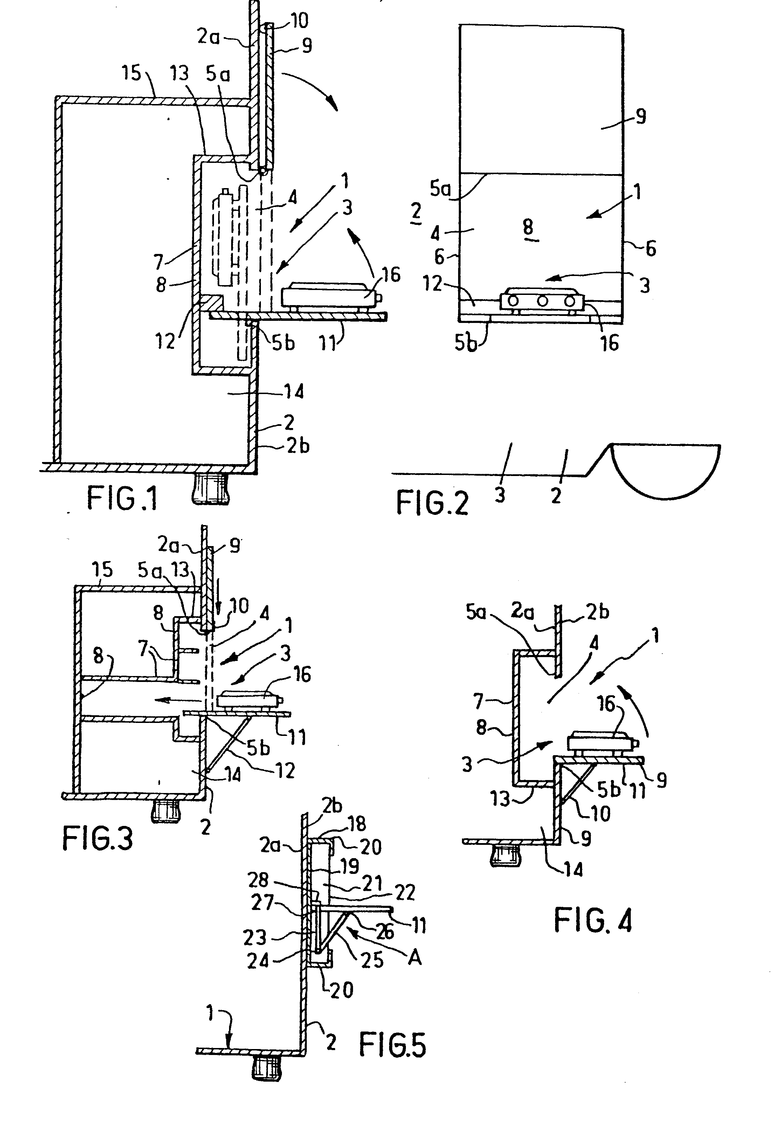

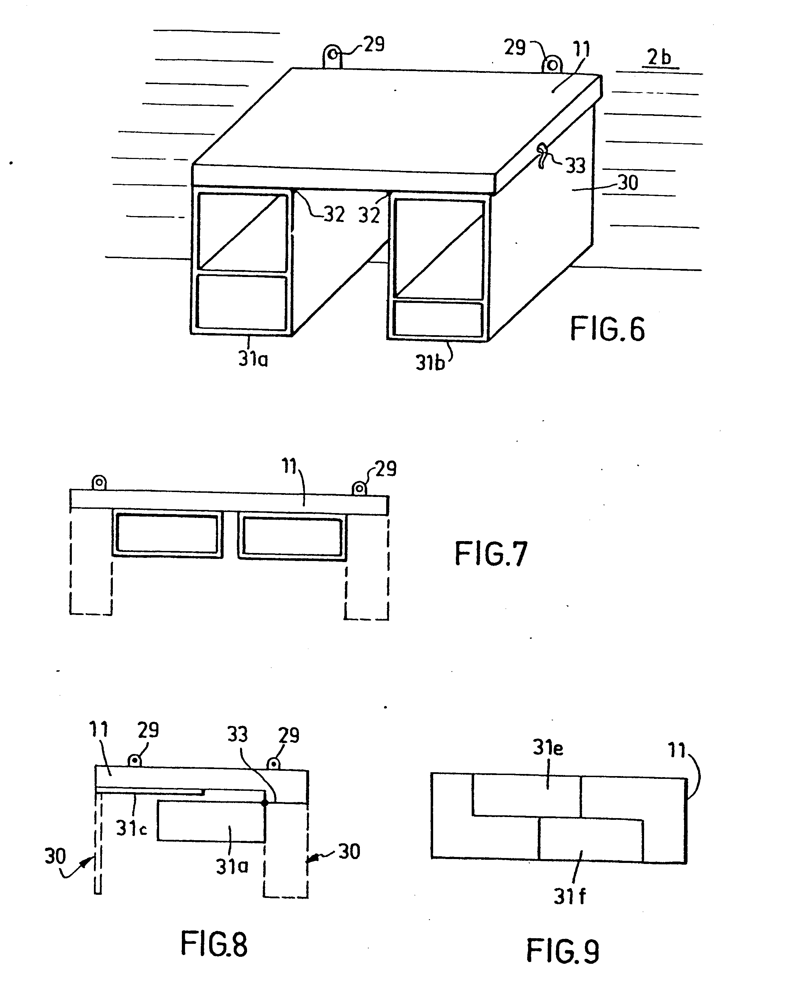

La figure 1 est une vue schématique en coupe par un plan vertical transversal d'un véhicule suivant l'invention auquel est associé un meuble ; la figure 2 est une vue en élévation du véhicule de là figure 1 ; les figures 3, 4 et 5 sont trois vues schématiques en coupe par des plans verticaux transversaux de trois autres variantes suivant l'invention ; la figure 6 est une vue schématique, en perspective, d'une autre variante possible d'un meuble utilisable dans un véhicule ; la figure 7 est une vue, en élévation, du meuble de la figure 6, en trait plein, plié et en pointillé, déplié ; la figure 8 est une vue schématique, en élévation d'une autre variante de meuble représenté plié en trait plein et, en trait interrompu, déplié ; la figure 9 est une vue en plan, de dessous, d'une autre variante du meuble plié.

Suivant l'invention et les figures 1 à 4, il est proposé un véhicule 1, en particulier une caravane, du type comportant notamment une paroi 2 normalement verticale, par exemple un panneau 5 latéral de la caravane, auquel est associé un meuble 3.

Le meuble 3 est tout aussi bien applicable à d'autres types de véhicule automobile ou non.

Ce meuble comprend :

- une ouverture 4 percée dans la paroi 2, de forme générale polygonale ou pseudo-polygonale, notamment de forme rectangulaire, délimitée par un bord horizontal supérieur 5a, un bord horizontal inférieur 5b et deux bords verticaux 6.

- un caisson 7 fixé à la face interne 2a, de la paroi 2, dont le fond 8 est écarté transversalement de ladite paroi 2 tout en étant placé en regard de l'ouverture 4.

- une porte 9, mobile, reliée mécaniquement à la paroi 2 ou/ et au caisson 7, susceptible d'occuper soit une position ouverte, soit une position fermée ou l'ouverture 4 est respectivement totalement démasquée ou totalement masquée et la porte 9 placée au moins sensiblement dans le même plan que la paroi 2. D'une façon générale, la porte 9 a une forme correspondant au moins sensiblement à celle de l'ouverture 4.

- des moyens d'accrochage 10 de la porte 9, soit dans sa position ouverte, soit dans sa position fermée.

- des moyens support 11, mobiles, reliés mécaniquement à la paroi 2 ou/et au caisson 7 susceptibles d'occuper soit une position escamotée dans laquelle les moyens support 11 sont logés dans le caisson 7 et la porte 9 susceptible d'être en position fermée, soit dans une position de travail dans laquelle les moyens support 11 sont placés au moins sensiblement à l'horizontal et vers l'extérieur du véhicule 1 en saillant de la paroi 2.

- des moyens d'accrochage 12 des moyens support 11 soit en position escamotée, soit en position de travail.

Le caisson 7 comporte, outre le fond 8, un entourage 13 reliant ledit fond 8 à la paroi 2. De préférence, le caisson 7 n'est sensiblement accessible que par l'ouverture 4. De préférence également, la profondeur de ce caisson 7 entre la paroi 2 et le fond 8 est aussi faible que possible. Le caisson 7 peut être logé notamment dans une zone perdue du véhicule 1. Il peut être logé dans la partie arrière 14 d'un bloc de cuisine 15, normalement monté dans le véhicule 1 contre la paroi 2. Il peut aussi être logé dans le fond de tout meuble ou dans l'épaisseur de la paroi ou en légère saillie à l'intérieur du véhicule.

Le porte 9 est montée mobile à pivotement (figures 1, 2, 4) autour d'un axe horizontal, d'un axe vertical ou éventuellement d'un axe oblique, ou encore montée à coulissement dans son propre plan (figure 3), selon un axe de coulissement vertical ou horizontal ou encore oblique ou selon une combinaison d'un pivotement et d'un coulissement. A cet effet, il est prévu des moyens reliant la porte 9 à la paroi 2, constitués notamment par des charnières lorsque la porte est montée à pivotement ou des glissières lorsque la porte est montée à coulissement. Dans le cas de la figure 1, la charnière est associée au bord horizontal supérieur 5a de l'ouverture 4. Dans le cas de la figure 4, au contraire, la charnière est associée au bord horizontal inférieur 5b.

Naturellement, la porte 9 et/ou la paroi 2 sont préférentiellement pourvues de moyens assurant l'étanchéité lorsque la porte 9 est en position fermée.

Les moyens d'accrochage 10 de la porte 9 sont notamment soit magnétiques (aimants), soit mécaniques (verrous, cliquets, etc.) Préférentiellement, ces moyens sont à verrouillage en ce qui concerne le maintien de la porte en position fermée.

Les moyens support 11, sont dans une première forme d'exécution possible illustrée notamment par les figures 1 à 3, distincts de la porte 9. Dans une seconde forme d'exécution possible, illustrée par la figure 4, les moyens support 11 sont constitués par la porte 9 elle-même.

Les moyens support 11 peuvent faire l'objet de très nombreuses variantes d'exécution fonction du but spécifique visé par ces moyens. En particulier mais non exclusivement, on peut destiner ces moyens au maintien d'un réchaud 16 ou encore une penderie (non représentée).

Les moyens support 11 sont montésmobiles soit à pivotement autour d'un axe horizontal, vertical ou oblique (figures 1, 2, 4) soit à coulissement horizontal ou vertical (figure 3), soit selon une combinaison d'un pivotement ou d'un coulissement. Naturellement, la forme du caisson 7 est en correspondance avec l'encombrement des moyens support 11. C'est pourquoi, dans le cas des figures 1, 2, 4 le caisson 7 est plat, les moyens support 11 étant montésà pivotement. Par contre, dans le cas de la figure 3, le caisson 7 a une forme générale de T renversé compte tenu que les moyens 11 sont montés à coulissement horizontal. A cet effet, il est prévu des moyens mécaniques assurant le pivotement (charnières) ou le coulissement (glissières ou autres). Ces moyens tels que charnières ou glissières sont associés à la paroi 2 ou/et au caisson 7. Naturellement, les différents modes de déplacement possibles (rotation, coulissement) des moyens support 11 peuvent être combinés aux différents modes de déplacement (rotation, coulissement) de la porte 9. Ainsi, dans le cas des figures 1 et 2, les moyens 11 sont montés mobiles à pivotement autour du bord horizontal inférieur 5b. Dans le cas de la figure 3, les moyens support 11 sont montés à coulissement horizontal.

Les moyens d'accrochage 12 des moyens support 11 peuvent également faire l'objet d'un très grand nombre de variantes, et ce, en liaison avec les différentes variantes possibles de déplacement de ces moyens support 11. Ainsi, dans le cas des figures 1 et 2, les moyens d'accrochage 12 sont constitués par une sorte de traverse horizontale sur laquelle viennent se bloquer les moyens support 11 lorsque ceux-ci sont en position de travail. Dans le cas des figures 3 et 4, les moyens d'accrochage 12 sont constitués par une ou plusieurs béquilles placées entre ces moyens 11 et la face externe de la paroi 2. On conçoit cependant que ces béquilles sont susceptibles d'être placées de toute autre façon possible.

- 6 -

0008978

Les moyens ou organes tels que réchaud 16, penderie ou autres, sont notamment rigidement fixés aux moyens support 11 constitués par une plaque rigide. Cette disposition est impérative lorsque les moyens support sont placés verticalement en position escamotée.

Le meuble qui vient d'être décrit est initialement à état plié c'est-à-dire que les moyens support 11 sont escamotés et la porte 9 fermée. Dans ce cas, le meuble 3 qui fait partie intégrante du véhicule 1 ne constitue pas une gêne. Pour pouvoir utiliser le meuble, on commence par déplacer la porte 9 pour la faire passer de sa position fermée à sa position ouverte ce qui démasque l'ouverture 4. On agit sur les moyens d'accrochage de la porte pour maintenir celle-ci en position ouverte. Les moyens upport 11 sont alors accessibles de l'extérieur du véhicle et il est possible de les manipuler pour les faire passer de la position escamotée à la position de travail dans laquelle ils sont maintenus grâce aux moyens d'accrochage 12. L'utilisateur peut alors utiliser les moyens et organes tels que réchaud, penderie ou autres posés sur les moyens support 11.

On conçoit naturellement que le meuble suivant l'invention peut comporter des moyens asservissant systématiquement le déplacement des moyens support 11 au déplacement de la porte 9. De même, le meuble 3 peut comporter des moyens susceptibles de faciliter le déplacement de la porte 9 et des moyens 11 tels que vérins, moteurs, etc.

Le meuble 17, illustré sur la figure 5 comporte un caisson 18, rapporté sur la face externe 2b de la paroi 2 du véhicule 1 en étant rigidement fixé à cette paroi 2 par tout moyen approprié : soudage, vissage, etc. Ce caisson 18 a, par exemple, une forme générale parallélépipédique pourvue d'un fond vertical 19, appliqué sur la paroi 2 ; deux faces horizontales 20, respectivement supérieure et inférieure et deux faces verticales 21. Les faces horizontale et verticale 20,21 définissent une ouverture frontale 22. Cette ouverture 22 peut, le cas échéant, être obturée par une porte mobile, non représentée sur la figure 5, susceptible de se présenter notamment sous toutes les variantes déjà décrites à propos de la porte 9.

Dans le caisson 18, sont fixées, par tout moyen approprié, deux coulisses 23, verticales, écartées transversalement l'une de l'autre, s'étendant par exemple à partir de la face horizontale inférieure 20 de ce caisson. A la partie inférieure de chaque coulisse 23, est articulée autour d'un axe 24, horizontal et parallèle au fond 19, une biellette support 25 qi à son extrémité libre opposée, est articulée autour d'un axe horizontal 26, parallèle à l'axe 24, à la partie médiane de moyens support 11 du même type que ceux décrits précédemment. A leur partie extrême libre, les moyens support 11 sont montés coulissants grâce à des moyens de guidage 27 sur la coulisse 23. Plus précisément, les moyens de guidage 27 sont susceptibles de coulisser entre deux positions extrêmes, l'une illustrée sur la figure 5 correspondant à une position de travail des moyens support 11, l'autre correspondant à une position escamotée de ces moyens support 11. En l'occurrence, dans la position de travail, les moyens 11 sont placés horizontalement et bloqués dans cette position extrême soit par la biellette 25, soit du fait de moyens de blocage de fin de course 28 prévus sur les coulisses 23 et coopérant avec les moyens de guidage 27. Naturellement, s'il est prévu une orte sur le caisson 18, celle-ci est ouverte lorsque les moyens support 11 sont en position de travail. En position escamotée, les moyens support 11 sont placés verticalement dans le caisson 18, la biellette 25 occupant alors une position sensiblement verticale. Dans ce cas, l'éventuelle porte du caisson 18 est fermée.

Sur les figures 6 à 9, sont représentées d'autres variantes de meubles mobiles faisant partie d'un véhicule suivant l'invention.

0008978

- 8 -

Sur les figures 6 et 7 sont représentés des moyens support 11 se présentant notamment sous la forme d'un plateau par exemple rectangulaire, en tout matériau approprié. Il est prévu, en outre, des moyens d'accrochage 12 amovibles, des moyens support 11 sur le véhicule 1. Ces moyens d'accrochage 12 se présentent en combinaison sous la forme d'organes d'accrochage 29 tels que des pattes ou similaires fixées aux moyens support 11, avec lesquelles peuvent coopérer des organes d'accrochage complémentaires fixés à la paroi 2, de la caravane, tels que des crochets ou autres. Les moyens d'accrochage 12 comportent , en outre , des organes 30 de maintien des moyens support 11 dans leur position de travail. Ces organes de maintien se présentent, par exemple, sous la forme de deux caissons 31a, 31b, associés aux moyens support 11 et s'étendant vers le bas à partir de ceux-ci. Ces caissons 31a, 31b , viennent s'appliquer sur la face externe 2b de la paroi 2, en maintenant donc les moyens support 11 horizontalement lorsque ces moyens sont en position de travail.

Suivant une forme d'éxécution préférentielle, les caissons 31a, 31b sont montés articulés au plateau constituant les moyens support 11 autour de charnières horizontale 32 ayant normalement une position orthogonale par rapport à la paroi 2. Cette forme de réalisation permet de ménager dans les caissons 31a, 31b, des zones de rangement. Préférentiellement, les charnières 32 sont palcées du côté intérieur des caissons comme illustré sur les figures 6 et 7 ce qui permet de diminuer l'encombrement du meuble plié, comme illustré par la figure 7. Bien entendu, il est prévu des moyens d'accrochage 33 des caissons 31a, 31b par rapport aux moyens support 11. Ces moyens d'accrochage 33 se présentent notamment sous la forme de crochets ou autres.

Sur la figure 8, est représentée une autre variante dans laquelle les moyens support 11 sont plus étroits et les organes de maintien 30 constitués d'une part d'un caisson 31a,

0008978

et, d'autre part, d'une sorte de pied 31c plat, venant se loger en position repliée sous la face interne des moyens 11 partiellement en regard du caisson 31a qui, à cet effet, est légèrement écarté de ladite face inférieure des moyens 11 du fait d'une surépaisseur 33 réalisée par tout moyen approprié.

Sur la figure 9, est représentée une autre variante dans laquelle les organes de maintien 30 se présentent sous la forme de deux caissons 31e, 31f, occupant chacun une demi-largeur au plus des moyens support 11, ces deux caissons 31e, 31 f venant, en position pliée, se juxtaposer dans la zone médiane des moyens support 11, ce qui permet de réduire leur longueur.

Un tel meuble suivant les figures 6 à 9, est destiné à être fixé, de façon amovible, à une paroi 2 d'un véhicule 1 et à être logé, replié et escamoté dans ledit véhicule 1.

Revendications de brevet.

1. Véhicule, en particulier caravane, du type comportant une paroi normalement verticale, caractérisé par le fait qu'il comprend un meuble comportant des moyens support (11) mobiles ou/et amovibles, reliées mécaniquement directement ou non à la paroi (2), du véhicule (1), susceptibles d'occuper soit une position escamotée et/ou pliée dans laquelle les moyens support (11) sont logés dans un caisson (7) ou dans le véhicule (1) soit une position de travail dans laquelle les moyens support (11) sont placés au moins sensiblement à l'horizontale et vers l'extérieur du véhicule (1) ; et des moyens d'accrochage (12) des moyens support (11) au moins en position de travail.

2. Véhicule selon 1, caractérisé par le fait que le meuble comporte un caisson (7, 18) fixé à la face externe (2b) ou à la face interne (2a) de la paroi (2) ; cette paroi (2) étant, dans ce dernier cas, percée d'une ouvertre (4) correspondante , de forme générale polygonale, notamment rectangulaire, limitée par deux bords horizontaux et deux bords verticaux, le caisson (7) étant alors écarté transversalement de la paroi (2) et en regard de l'ouverture (4).

3. Véhicule selon 1 et 2, caractérisé par le fait que le caissont (7, 18) est susceptible d'être fermé par une porte (9), mobile, reliée mécaniquement à la paroi (2) ou au caisson (7,18) susceptible d'occuper soit une position ouverte, soit une position fermée.

4. Véhicule selon 1 à 3, caractérisé par le fait que la porte (9) est montée à pivotement autour d'un axe horizontal ou vertical ou oblique ou à coulissement horizontal ou vertical ou oblique ou en une combinaison d'un mouvement de pivotement et d'un mouvement de coulissement.

0008978

- 2 -

5. Véhicule selon 1 à 4, caractérisé par le fait que les moyens support (11) sont montés à pivotement autour d'un axe horizontal ou vertical ou oblique, ou à coulissement horizontal ou vertical ou oblique, ou en un mouvement combiné de pivotement et de coulissement.

6. Véhicule selon 1 à 5, caractérisé par le fait que les moyens support (11) sont distincts de la porte (9).

7. Véhicule selon 1 à 4, caractérisé par le fait que les moyens support (11) sont constitués par la porte (9) proprement dite.

8. Véhicule selon 1 à 7, caractérisé par le fait qu'il comprend des moyens asservissant cinématiquement le déplacement des moyens support (11) au déplacement de la porte (9).

9. Véhicule selon 1, caractérisé par le fait que les moyens d'accrochage (12) comprennent d'une part des organes d'accrochage (29) tels que des oeillets notamment et, d'autre part, des organes de maintien (30) se présentant sous la forme de caissons ou pieds (31a,) (31b), (31c), (31d), (31e), (31f).

10. Véhicule selon 9, caractérisé par le fait que les caissons (31a), (31b), (31e), (31f) sont montés à pivotement par rapport aux moyens support (11) autour de charnières (32).

11. Véhicule selon 1, 9 et 10, caractérisé par le fait que les charnières (32) sont placées du côté intérieur des caissons.

12. Véhicule selon 1, 9 à 11, caractérisé par le fait qu'il est prévu des moyens d'accrochage (33) des caissons par rapport aux moyens support (11).

0008978

FIG.1

FIG.2

FIG.3

FIG. 4

FIG.5

0008978

FIG.6

FIG.7

FIG.8

FIG.9

Office européen
des brevets

**RAPPORT DE RECHERCHE EUROPEENNE**

| Catégorie | Citation du document avec indication, en cas de besoin, des parties pertinentes | Revendication concernée |
|---|---|---|
| X | FR - A - 470 122 (LANCHESTER MOTOR COMPANY) <br> * en entier * | 1-5, 7 |
| | -- | |
| X | US - A - 4 068 601 (MARSH et al.) <br> * en entier * | 1-5, 7,8 |
| | -- | |
| X | US - A - 2 536 366 (HARRIS et al.) <br> * en entier * | 1-6 |
| | -- | |
| | DE - U - 1 893 408 (SCHWEIKERT) <br> * en entier * | 1-3 |
| | ---- | |

**DOCUMENTS CONSIDERES COMME PERTINENTS**

**CLASSEMENT DE LA DEMANDE (Int. Cl.3)**

B 60 P    3/36
A 47 B    31/06

**DOMAINES TECHNIQUES RECHERCHES (Int. Cl.3)**

A 47 B    31/00
B 60 P    3/00

**CATEGORIE DES DOCUMENTS CITES**

X: particullèrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 14-11-1979 | LUDWIG |

OEB Form 1503.1   06.78